## Europäisches Patentamt
## European Patent Office
## Office européen des brevets

(11) Veröffentlichungsnummer : **0 131 979**
**B1**

(12) **EUROPÄISCHE PATENTSCHRIFT**

(45) Veröffentlichungstag der Patentschrift :
11.11.87

(51) Int. Cl.⁴ : **G 01 F 23/22**, B 22 D 11/16

(21) Anmeldenummer : **84200831.0**

(22) Anmeldetag : **09.06.84**

(54) Verfahren zur Regelung der Badspiegelhöhe einer Metallschmelze.

(30) Priorität : 01.07.83 DE 3323749

(43) Veröffentlichungstag der Anmeldung :
23.01.85 Patentblatt 85/04

(45) Bekanntmachung des Hinweises auf die Patenterteilung : 11.11.87 Patentblatt 87/46

(84) Benannte Vertragsstaaten :
BE DE FR GB SE

(56) Entgegenhaltungen :
EP-A- 0 067 668
DE-A- 2 128 706
DE-B- 1 156 576
DE-B- 1 208 515
DE-B- 1 248 969
DE-B- 1 297 827
FR-A- 1 331 821
FR-A- 2 374 985
FR-A- 2 439 983
GB-A- 2 082 777
US-A- 4 175 612
Die Akte enthält technische Angaben, die nach dem Eingang der Anmeldung eingereicht wurden und die nicht in dieser Patentschrift enthalten sind.

(73) Patentinhaber : NORDDEUTSCHE AFFINERIE AG
Alsterterrasse 2
D-2000 Hamburg 36 (DE)

(72) Erfinder : Schliefer, Heinrich
Am Musterplatz 27
D-2105 Seevetal 3-Maschen (DE)
Erfinder : Naaf, Rüdiger
Hermannstrasse 9
D-2091 Marxen (DE)
Erfinder : Christ, Rolf

D-2862 Worpswede (DE)

(74) Vertreter : Rieger, Harald, Dr.
Reuterweg 14
D-6000 Frankfurt am Main (DE)

EP 0 131 979 B1

**Beschreibung**

Die Erfindung betrifft ein Verfahren zur Regelung der Badspiegelhöhe einer Metallschmelze, insbesondere in einer Stranggießkokille, durch Erfassen der Niveauänderung des Badspiegels mittels einer elektrischen Abstandsmeßeinrichtung.

Es ist bekannt, zur direkten Niveauüberwachung und Niveausteuerung einer Metallschmelze in einer Stranggießanlage mechanische Schwimmereinrichtungen zu verwenden. Derartige Einrichtungen sind starken mechanischen wie auch thermischen Belastungen ausgesetzt, die an z. B. Stranggießmaschinen auftreten und welche die Zuverlässigkeit der Messung beeinträchtigen. Es sind daher auch indirekte Abstandsmeßverfahren bekanntgeworden, die zuverlässiger und wartungsfreier arbeiten. Als indirekte Meßverfahren hat man radiometrische, optische, akustische und elektrische Verfahren bereitgestellt.

Bei radiometrischen Verfahren werden meist $Co_{60}$-Strahler als Sender von Gammastrahlen und Szintillationszähler als Empfänger verwendet, wobei die sich ändernde Flächenmasse im Meßbereich proportional zu den empfangenen Gammaquanten ist. Trotz Vorteilen einer solchen berührungslosen, wartungsfreien und verzögerungsarmen Messung ist die Handhabung des Präparates selbst und die potentielle Gefährdung des Personals als wesentlicher Nachteil anzusehen.

Thermographische Verfahren — in der einfachsten Form durch eine Kette von Thermoelementen realisiert, nach einer zweiten Form durch Dehnmeßstreifen oder Permeabilitätsveränderung, nach einen dritten Form mit Hilfe der Thermographie gewonnen, — bedingen im allgemeinen einen hohen apparativen Aufwand bei durchweg großer Trägheit des Meßvorgangs, d. h. Zeitverzögerungen von einer bis mehreren Sekunden müssen als Nachteil in Kauf genommen werden.

Optische Verfahren, beispielsweise Überwachung durch Fernsehkameras mit Zeilenstruktur oder durch Infrarotempfänger, arbeiten aus größerer Entfernung und beobachten die Oberfläche, das heißt nicht der wirkliche Metallbadspiegel, sondern das Niveau von Abdeckpulvern/Schlacke wird erfaßt. Somit werden also Veränderungen der Abdeckschicht erfaßt, wodurch wiederum Verschiebungen des eigentlich konstant zu haltenden Metallbadspiegels bewirkt werden.

Indirekte Schallverfahren nach dem Durchschallungs- oder Reflexionsprinzip bedingen wiederum hohen apparativen Aufwand, da große Schallenergien wegen der Durchdringung mehrerer Grenzflächen aufzubringen sind.

Hinsichtlich elektrischer Meßverfahren ist aus DE-PS 2 951 097 ein Verfahren zur Regelung der Gießspiegelhöhe in einer Stranggießkokille bekannt, das die Niveauänderungen des Gießspiegels nach dem Wirbelstromprinzip erfaßt. Bei diesem Verfahren wird ein von einer Senderspule ausgehendes, hochfrequentes magnetisches Wechselfeld erzeugt, das in zwei sekundären Empfängerspulen Spannungen induziert. Deren resultierende Differenzspannung wird bei der Sollhöhe des Gießspiegels zu Null abgeglichen, während die bei Abweichung des Gießspiegels von der Sollhöhe entstehende Spannung zur Regelung verwendet wird. Das vorbekannte Verfahren hat den Nachteil, daß die Senderspule und die Empfängerspulen in der Kokillenwandung in der Höhe des Gießspiegels angeordnet werden müssen oder oberhalb der Kokille montiert sind.

Die EP-A3-67 668 betrifft eine Vorrichtung für ein induktives Meßverfahren bei Niveauänderungen eines Metallbadspiegels. Bei diesem Verfahren wird ein induktiver Meßkopf (Meßspule) der Höhenänderung eines Metallbadspiegels nachgeführt. Hierbei wird nicht die Impedanz zwischen Meßelektrode und Badspiegel gemessen, sondern es wird die Impedanzänderung in der Meßspule verfolgt. Hierzu heißt es in EP-A3-67 668 (auf Seite 5, Zeilen 20 bis 25), daß, wenn sich der Abstand zwischen Spule und dem Schmelzenspiegel ändert, eine Änderung in der Impedanz in der Spule eintritt. Dabei löst die Spule ein elektrisches Signal aus, welches der Änderung des Abstandes entspricht. Das heißt im Ergebnis, daß über eine Brückenschaltung eine Abgleichung vorgenommen wird, wobei der Abgleichungswert ein Maß für die Lage bzw. Höhe des Badspiegels ist.

Eine ähnliche Vorrichtung, bei der jedoch die Impedanz zwischen Meßelektrode und Badspiegel als Meßgröße verwendet wird, ist aus GB-A-2 082 777 bekannt.

Der Erfindung liegt daher die Aufgabe zugrunde, ein Verfahren zur Regelung von Badspiegelhöhen von Metallschmelzen anzugeben, das insbesondere für alle Stranggieß-Kokillentypen und -abmessungen sowie bei den verschiedensten zu vergießenden Legierungen einzusetzen ist.

Die Erfindung löst diese Aufgabe, ausgehend von dem aus EP-A3-67 668 bekannten Verfahren zur Regelung der Badspiegelhöhe einer Metallschmelze, insbesondere in einer Stranggießkokille, durch berührungsfreies Erfassen der Niveauänderung des Badspiegels mittels einer mit einer Sonde versehenen elektrischen Abstandsmeßeinrichtung für die Messung der elektrischen Impedanz sowie mittels Überwachungs- und Steuerungseinrichtungen zur Aufnahme eines Entfernungssignals, das von der Abstandsmeßeinrichtung infolge einer Niveauänderung der Metallschmelze erzeugt und für die Niveausteuerung der insbesondere in einer Stranggießkokille befindlichen Metallschmelze auf ein gewünschtes Niveau verwendet wird, dadurch, daß die Niveauänderung mittels einer beweglichen Sonde durch periodisches Messen des Verlaufs der elektrischen Impedanz zwischen Metallschmelzenoberfläche und Sonde erfaßt wird, wobei die Sonde in einem Meßzyklus im wesentlichen vertikal zur und in Richtung auf die Schmelzenoberfläche bewegt wird, bei Erreichen eines gewählten, sehr kleinen, jedoch von Null verschiedenen Impedanzwertes ihre Bewegungsrichtung umkehrt, bis zum Erreichen eines sehr hohen Impedanzwertes bewegt wird und dort ihre Bewegungsrichtung wieder umkehrt.

Bei dem erfindungsgemäßen Verfahren wird — mit der Schmelze als Bezugselektrode — die Impedanz oberhalb des Spiegels der Metallschmelze gemessen. Dabei wurde gefunden, daß die Änderung der elektrischen Impedanz beim Übergang von dem Medium oberhalb der Schmelze zum Schmelzenspiegel nicht abrupt erfolgt, sondern daß die Änderung der Impedanz zwar nicht linear aber quasi stetig verläuft. Dies beruht auf dem Vorhandensein einer Grenzschicht zwischen Badoberfläche und darüberliegendem Medium.

Das über dem Badspiegel der Metallschmelze liegende und die Grenzschicht abschließende Medium kann z. B. durch die Badabdeckung gebildet werden, wie Salze, Kienruß, Schlacken oder oxidische Schichten. Die in ihrem Impedanzverlauf zu messende Grenzschicht ist bei höheren Badtemperaturen der Metallschmelze aber auch bei blanker Schmelzenoberfläche infolge von Ionisationsvorgängen in der schmelznahen Atmosphäre stets vorhanden. Dies ist beispielsweise beim Gießen unter Schutzgas der Fall.

Andere Aspekte des beschriebenen Verfahrens werden in der Anmeldung 84200810.4 (EP-A-130 635) mit gleichem Prioritätstag beansprucht.

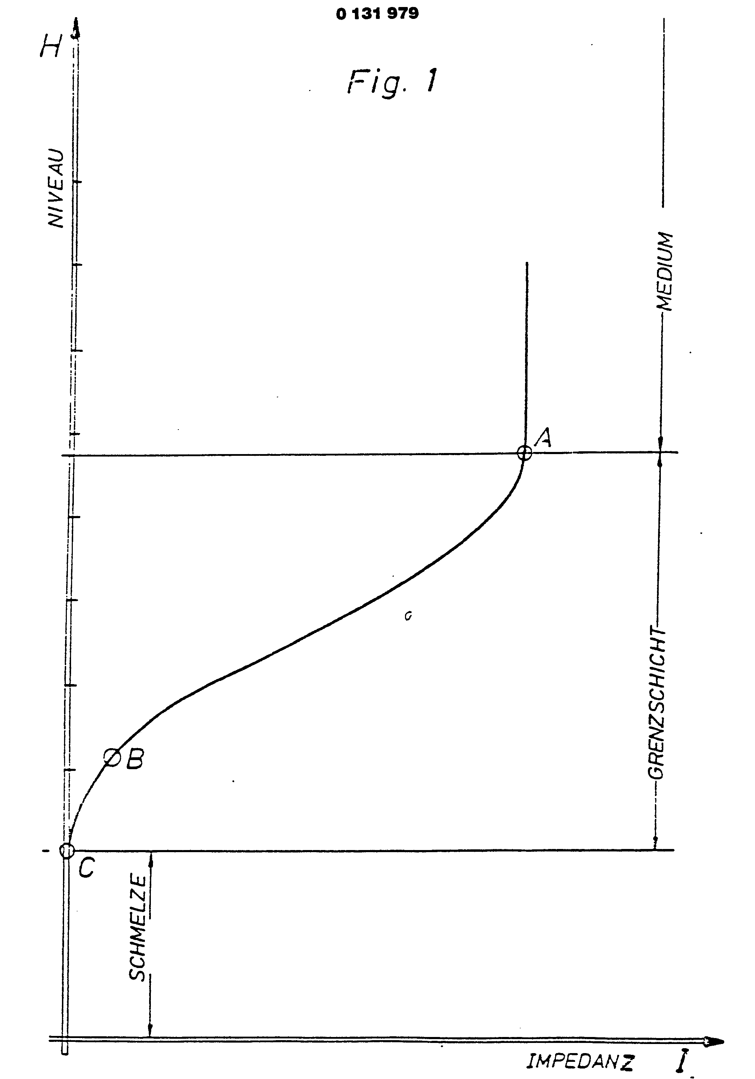

In Fig. 1 ist der Verlauf der elektrischen Impedanz innerhalb der Grenzschicht zwischen Metallbadspiegel und darüberliegendem Medium schematisch dargestellt.

Zur praktischen Durchführung des erfindungsgemäßen Verfahrens wird eine Sonde aus einem Material guter elektrischer Leitfähigkeit und gegebenenfalls guter Wärmebeständigkeit, verwendet, beispielsweise aus einem Material wie Chromstahl, Chrom-Nickel-Legierungen oder Graphit. Die Sonde wird, ausgehend von dem Bereich sehr hoher Impedanz oberhalb des Mediums auf die Schmelze im wesentlichen lotrecht zubewegt. Während dieser Bewegung wird ständig die Impedanz zwischen der Badoberfläche der Metallschmelze (Erdpotential) und der Sonde gemessen. Dabei wird gleichzeitig der Weg der Sonde in bekannter Weise z. B. potentiometrisch, als elektrischer Wert abgebildet.

Erreicht während der Sondenbewegung die Impedanz einen sehr kleinen, jedoch von Null noch verschiedenen Wert, das heißt, die Sollhöhe des Gießspiegels, so wird die Sondenbewegung durch elektrische und/oder elektronische Steuerung umgekehrt und die räumliche Lage des Umkehrpunktes wird durch die Wegmeßeinrichtung der Sonde erfaßt und gespeichert. Der beschriebene Vorgang wird erneut eingeleitet, wenn die Sonde den Bereich hoher Impedanz außerhalb der Grenzschicht wieder erreicht hat. Die erneute Messung kann aber auch über eine Zeitsteuerung erfolgen. In jedem Fall resultiert eine periodisch taktende Messung. Periodendauer, Fahrgeschwindigkeit der Sonde und Tasthub lassen sich mit an sich bekannten elektrischen Schaltmitteln in weiten Grenzen variieren und an die Meß- bzw. Regelaufgabe anpassen.

Ein besonderer Vorteil des erfindungsgemäßen Verfahrens besteht darin, daß mit der Meßsonde, die im einfachsten Fall aus einem wenige Millimeter starken Draht bestehen kann, die Niveauänderung von Metallbadspiegeln auch in Behältern mit sehr kleinen, z. B. weniger als 50 mm betragenden Innendurchmesser erfaßt und gesteuert werden kann. Das erfindungsgemäße Verfahren ist speziell für Kokillen, insbesondere Stranggießkokillen mit Durchmesser kleiner als 150 mm geeignet, d. h. für Kokillen, bei denen nur ein schmaler Spalt des flüssigen Metalles für die Messung zur Verfügung steht. Ein weiterer wesentlicher Vorteil des erfindungsgemäßen Verfahrens liegt darin, daß Meßhöhen mit Werten von wenigen Millimetern bis zu mehreren Metern umfaßt werden können.

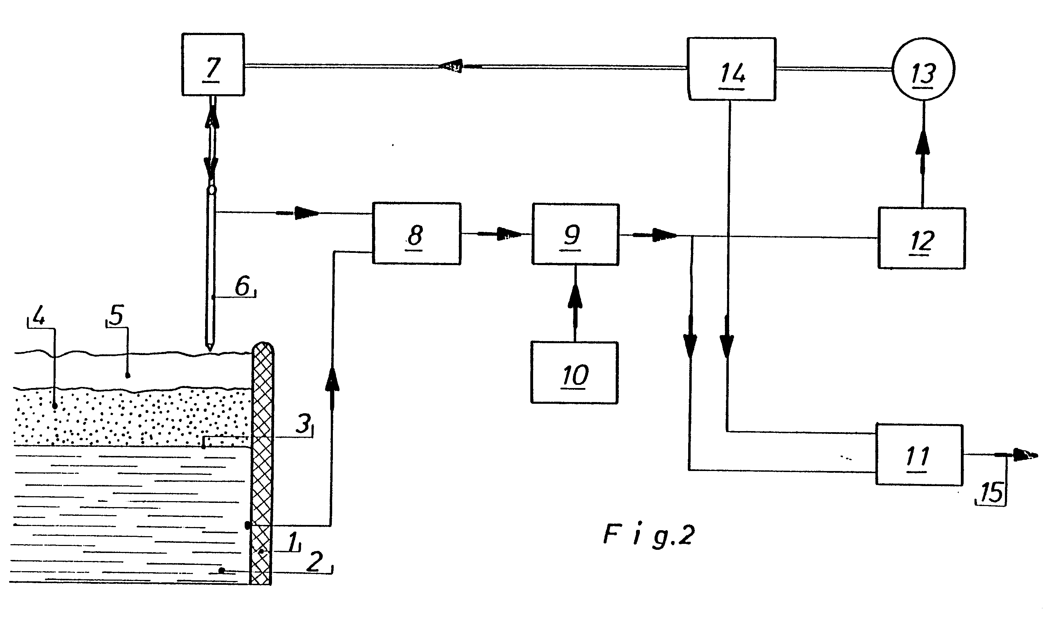

In der Abbildung der Fig. 2 ist ein beispielhaftes Blockschaltbild zur Durchführung des erfindungsgemäßen Verfahrens dargestellt.

Im Behälter (1) der Fig. 2 befindet sich die Metallschmelze (2) mit darüberliegenden Medium (5). Oberhalb des Badspiegels (3) hat sich eine Grenzschicht (4) ausgebildet. Die Sonde (6) wird mittels des Verschiebemechanismus (7) zur Schmelze (2) hin oder von dieser weg bewegt. Es bezeichnen ferner

    8 die Impedanzmeßschaltung,
    9 den Komparator,
    10 den Impedanzgrenzwert- bzw. Sollwerteinsteller
    11 die Tor- und Speicherschaltung
    12 die Motorsteuerung
    13 einen Servomotor
    14 die Wegmeßeinrichtung.

Mit 15 ist das ausgehende Meßsignal bezeichnet, das zur Regelung des Metallbadspiegels durch Metallschmelzenzulauf (in der Zeichnung nicht dargestellt) dient.

Das Meßsignal steuert beispielsweise eine Vorrichtung zum Verändern eines Flüssigmetallstromes hoher Temperatur in einem ringsum geschlossenen linearen Kanal mit mehreren, auf Magnetkernen angeordneten elektromagnetischen Spulen (DE-OS 2 924 116 und 3 024 970). Weiterhin kann das Meßsignal auch zur Steuerung von Durchflußregeleinrichtungen, beispielsweise keramischen Ventilen für Metallschmelzen, verwendet werden (Variocast®).

Das Schaltung Regelsystem wirkt gemäß dem erfindungsgemäßen Verfahren in der folgenden Weise :

Bei der in Fig. 2 gezeigten Ausgangssituation befindet sich die Sonde (6) außerhalb der Grenzschicht, also oberhalb vom Punkt (A) der Fig. 1.

Es sei angenommen, daß am Sollwerteinsteller (10) ein Impedanzwert vorgegeben ist, der dem Punkt (B) in Fig. 1 entspricht. Der Komparator (9) wird dann eine Differenz zwischen dem von der Impedanzmeßschaltung (8) gelieferten Wert

(entspr. B) feststellen und über die Motorsteuerung (12) den Servomotor (13) ansteuern, so daß er über den Verschiebemechanismus (7) die Sonde (6) zur Schmelze hin bewegt.

Wenn die Sonde die Grenzschicht erreicht, wird diese also von (A) in Richtung (B) durchfahren. Erreicht die von (8) gemessene Impedanz den Sollwert (B), so steuert der Komparator (9) über (12), (13) und (7) die Sondenbewegung um, so daß sich die Sonde von (B) aus in Richtung (A) Fig. 1 bewegt. Im Augenblick der Umsteuerung wird die von der Wegmeßeinrichtung (14) gemessene Position der Sonde (6) als elektrischer Wert von der Tor- und Speicherschaltung (11) übernommen. Somit ist der hier gespeicherte Wert und mithin das aus ihm gebildete Meßsignal (15) proportional der räumlichen Lage des Punktes (B).

Liegt der Punkt (B) sehr nahe beim Übergang von der Grenzschicht zur Schmelze, so ist das Meßsignal auch mit genügender Annäherung proportional der räumlichen Lage der Schmelzenoberfläche (entspricht dem Punkt C in Fig. 1).

Durch entsprechende Auslegung der Motorsteuerung (12) wird sichergestellt, daß die Umsteuerung bei Erreichen des Impedanzsollwertes (Punkt B) sehr rasch erfolgt und außerdem, daß nach dem Umsteuern die Sonde erst einen gewissen Weg in Richtung höherer Impedanzwerte zurücklegt, bevor der nächste Meßvorgang freigegeben wird, der dann wieder in der beschriebenen Weise abläuft, so daß sich eine periodische Messung mit in weiten Grenzen einstellbarer Taktfolge ergibt.

## Patentansprüche

1. Verfahren zur Regelung der Badspiegelhöhe einer Metallschmelze, insbesondere in einer Stranggießkokille, durch berührungsfreies Erfassen der Niveauänderung des Badspiegels (C) mittels einer mit einer Sonde versehenen elektrischen Abstandsmeßeinrichtung für die Messung der elektrischen Impedanz sowie mittels Überwachungs- und Steuerungseinrichtungen zur Aufnahme eines Entfernungssignals, das von der Abstandsmeßeinrichtung infolge einer Niveauänderung der Metallschmelze erzeugt und für die Niveausteuerung der insbesondere in einer Stranggießkokille befindlichen Metallschmelze auf ein gewünschtes Niveau verwendet wird, dadurch gekennzeichnet, daß die Niveauänderung mittels einer beweglichen Sonde durch periodisches Messen des Verlaufs der elektrischen Impedanz zwischen Metallschmelzenoberfläche (C) und Sonde erfaßt wird, wobei die Sonde in einem Meßzyklus im wesentlichen vertikal zur und in Richtung auf die Schmelzenoberfläche (C) bewegt wird, bei Erreichen eines gewählten, sehr kleinen, jedoch von Null verschiedenen Impedanzwertes (B) ihre Bewegungsrichtung umkehrt, bis zum Erreichen eines sehr hohen Impedanzwertes (A) bewegt wird und dort ihre Bewegungsrichtung wieder umkehrt.

2. Verfahren nach Anspruch 1, dadurch gekennzeichnet, daß die Sondenbewegung in ein elektrisches Signal umgewandelt wird und der dem Umkehrpunkt proportionale Signalwert für eine befristete Zeit gespeichert wird.

3. Verfahren nach einem den Ansprüchen 1 oder 2, dadurch gekennzeichnet, daß eine Sonde aus einem Material guter elektrischer Leitfähigkeit und gegebenenfalls guter Wärmebeständigkeit verwendet wird.

## Claims

1. A methof of automatically controlling the surface level of a bath of molten metal, particularly in a mould for continuous casting, a change of the surface level (C) of the bath is detected by an electric distance-measuring device, which comprises a probe and serves to measure the electric impedance, and by monitoring and control means for receiving a distance signal, which is produced by the distance-measuring device in response to a change of the surface level of the molten metal and is used to control the surface of the molten metal, which is particularly contained in a mould for continuous casting, to a desired level, characterized in that the change of the surface level is detected by means of a movable probe by a periodical measurement of the electrical impedance between the surface (C) of the molten metal and the probe is moved in a measuring cycle substantially vertically towards the surface (C) of the molten material, the direction of movement of the probe is reversed when a selected impedance value (B), which is very small but differs from zero, has been reached, the probe is then moved until a very high impedance value (A) has been reached, and the direction of movement of the probe is then reversed again.

2. A method according to claim 1, characterized in that the movement of the probe is converted to an electric signal and the signal value which is proportional to the point of reversal is stored for a limited time.

3. A method according to claims 1 or 2, characterized in that a probe is used which consists of a material that has a high electrical conductivity and, if desired, a high heat resistance.

## Revendications

1. Procédé de réglage du niveau de la surface d'un bain de métal fondu, notamment dans une lingotière à coulée continue, en détectant sans contact la variation du niveau du bain (C) au moyen d'un dispositif électrique de mesure des distances destiné à mesurer l'impédance électrique, ainsi qu'au moyen de dispositifs de surveillance et de commande destinés à recevoir un signal de distance, produit par le dispositif de mesure des distances à la suite d'une variation du niveau du métal fondu et utilisé pour amener le niveau du métal fondu, se trouvant notamment dans une lingotière, au niveau souhaité, caractérisé en ce qu'il consiste à détecter la variation de niveau au moyen d'une sonde mobile en mesurant périodiquement la variation de l'impédance électrique entre la surface du métal fondu (C) et la sonde, la sonde étant, dans un cycle de mesure, déplacée sensiblement verticalement vers et en direction de la surface du métal fondu (C), à en inverser le sens de déplacement lorsqu'une impédance (B) sélectionnée, de valeur très petite, mais non nulle est atteinte, à la déplacer jusqu'à ce qu'une impédance (A) très grande soit atteinte et là à en inverser à nouveau le sens de déplacement.

2. Procédé suivant la revendication 1, caractérisé en ce qu'il consiste à transformer le mouvement de la sonde en un signal électrique et à mettre en mémoire la valeur du signal proportionnelle au point de rebroussement pendant une durée limitée.

3. Procédé suivant l'une des revendications 1 ou 2, caractérisé en ce qu'il consiste à utiliser une sonde en un matériau ayant une bonne conductivité électrique et, le cas échéant, résistant bien à la chaleur.

**0 131 979**

Fig. 1

F i g.2

0 131 979